# EUROPÄISCHE PATENTANMELDUNG

(11) **EP 1 488 948 A2**
(43) Veröffentlichungstag der Anmeldung: **22.12.2004**
(21) Anmeldenummer: 04013979.2
(22) Anmeldetag: 15.06.2004
(51) Int. Cl.: B60K 17/356

(54) **Anordnung zum Antrieb einer Hydraulikpumpe eines hydraulischen Zusatzantriebs eines Kraftfahrzeugs**

(30) Priorität: 17.06.2003 DE 10327145
(71) Anmelder: DaimlerChrysler AG, 70567 Stuttgart (DE)
(72) Erfinder: Steffens, Frank, 73760 Ostfildern (DE)

(57) **Zusammenfassung**

2.1. Bei bekannten Anordnungen erfolgt der Antrieb einer Hydraulikpumpe eines hydraulischen Zusatzantriebs eines Kraftfahrzeugs hinter einem Getriebe über eine Schaltkupplung. Dies kann zu Verspannungen zwischen einer Antriebsachse und einer Zusatzantriebsachse führen. Es ist die Aufgabe der Erfindung, eine Anordnung vorzuschlagen, welche ein gutes Fahrverhalten und einen verschleißarmen Betrieb des Kraftfahrzeugs mit zugeschaltetem Zusatzantrieb ermöglicht.
2.2. Bei der erfindungsgemäßen Anordnung ist nach dem Getriebe (12) ein Differenzialgetriebe (14) angeordnet, über welches der Antrieb einer Hydraulikpumpe (29) erfolgt. Im Differenzialgetriebe (14) wird die Leistung einer Antriebsmaschine (11) auf eine Antriebsachse (22) und eine Zusatzantriebsachse (36) mit veränderbaren Anteilen verteilt. Damit können keine Verspannungen zwischen der Antriebsachse (22) und der Zusatzantriebsachse (36) auftreten.
2.3. Einsatz in einem Kraftfahrzeug.

## Beschreibung

Die Erfindung betrifft eine Anordnung zum Antrieb einer Hydraulikpumpe eines hydraulischen Zusatzantriebs eines Kraftfahrzeugs gemäß dem Oberbegriff des Patentanspruchs 1 und ein Kraftfahrzeug mit einem hydraulischen Zusatzantrieb nach Anspruch 5.

Hydraulische Zusatzantriebe für Kraftfahrzeuge sind bekannt. Beispielsweise beschreibt die DE 35 45 481 A1 eine Antriebseinrichtung für Kraftfahrzeuge mit einer Antriebsachse, welche von einer Antriebsmaschine in Form eines Fahrzeugmotors mechanisch angetrieben wird, und einer zuschaltbaren Zusatzantriebsachse, welche von der Antriebsmaschine nicht mechanisch angetrieben wird. An Fahrzeugrädern der Zusatzantriebsachse sind als Radnabenmotoren ausgebildete Hydromotoren angeordnet, welche hydrostatisch angetrieben werden. Eine dafür notwendige Hydraulikpumpe wird von einer Getriebeausgangswelle eines nach der Antriebsmaschine angeordneten Getriebes über eine Schaltkupplung angetrieben. Bei geschalteter Schaltkupplung ist damit eine Antriebsdrehzahl der Hydraulikpumpe proportional zu einer Drehzahl der Getriebeausgangswelle. Damit besteht ein festes Übersetzungsverhältnis zwischen der Drehzahl der Getriebeausgangswelle und der Drehzahl der Hydromotoren. Dies kann beispielsweise beim Befahren von festen Straßen mit zugeschalteter Zusatzantriebsachse zu Verspannungen zwischen der Antriebsachse und der Zusatzantriebsachse führen.

Aufgabe der Erfindung ist es demgegenüber, eine Anordnung zum Antrieb einer Hydraulikpumpe eines hydraulischen Zusatzantriebs eines Kraftfahrzeugs, sowie ein die Anordnung enthaltendes Kraftfahrzeug vorzuschlagen, welche ein gutes Fahrverhalten und einen verschleißarmen Betrieb des Kraftfahrzeugs mit zugeschaltetem Zusatzantrieb ermöglichen. Erfindungsgemäß wird die Aufgabe durch die Merkmale der Ansprüche 1 und 5 gelöst.

Nach dem Getriebe, welches beispielsweise als ein Zahnräderwechselgetriebe oder ein Planetengetriebe ausgeführt sein kann, ist ein Differenzialgetriebe angeordnet, also ein Getriebe mit einem Leistungs-Eingang und zwei Leistungs-Ausgängen. Der Antrieb der Hydraulikpumpe erfolgt über das Differenzialgetriebe und damit über einen der beiden Leistungs-Ausgänge des Differenzialgetriebes. Über den zweiten Leistungs-Ausgang wird eine Leistung auf die Fahrzeugräder der angetriebenen Fahrzeugachse aufgebracht. Die Leistung der Antriebsmaschine kann damit vom Differenzialgetriebe auf die beiden Leistungs-Ausgänge aufgeteilt werden. Die Aufteilung der Leistung ist dabei nicht konstant, sondern ändert sich in Abhängigkeit von Drehmomenten und Drehzahlen des Differenzialgetriebes. Im Differenzialgetriebe erfolgt also eine Leistungsverzweigung auf die Fahrzeugräder der Antriebsachse und die Hydraulikpumpe des Zusatzantriebs. Ein Drehzahlverhältnis von Drehzahlen der Fahrzeugrädern der Antriebsachse und der Hydraulikpumpe ist nicht konstant.

Damit kann es zu keinen Verspannungen zwischen der Antriebsachse und der Zusatzantriebsachse kommen. Verspannungen in einem Antriebsstrang eines Kraftfahrzeugs haben negative Auswirkungen auf das Fahrverhalten, beispielsweise Rückwirkungen auf ein Lenkrad. Außerdem kann bei Verspannungen ein erhöhter Verschleiß im Antriebsstrang und insbesondere an den Fahrzeugreifen auftreten. Dadurch dass die erfindungsgemäße Anordnung Verspannungen verhindert, treten die genannten Effekte bei der Verwendung des erfindungsgemäßen Anordnung nicht auf.

Außerdem können die Antriebsachse und die Zusatzantriebsachse unterschiedlich angetrieben werden, um beispielsweise unterschiedliche Traktionen der Achsen, also unterschiedliche Reibwerte zwischen Fahrzeugreifen und Fahrbahn, ausnutzen zu können.

In Ausgestaltung der Erfindung verfügt das Differenzialgetriebe über zwei Schaltstellungen, wobei der Antrieb der Hydraulikpumpe nur in einer ersten der beiden Schaltstellungen erfolgt. In der zweiten Schaltstellung verfügt das Differenzialgetriebe also nicht über einen zweiten Leistungsausgang, womit keine Leistungsverzweigung stattfinden kann.

Der hydraulische Zusatzantrieb ist damit einfach ein- und ausschaltbar. Im ausgeschalteten Zustand wird keine Leistung der Antriebsmaschine für den Zusatzantrieb aufgewendet, so dass der Wirkungsgrad und damit der Energieverbrauch des Kraftfahrzeugs quasi einem Kraftfahrzeug ohne Zusatzantrieb entspricht. Der Zusatzantrieb kann also in Sondersituationen, beispielsweise bei Fahrten im Gelände oder auf glatter Fahrbahn, oder niedrigen Fahrzeuggeschwindigkeiten vorteilhaft eingesetzt werden, ohne den sonstigen Betrieb des Kraftfahrzeugs negativ zu beeinflussen.

In Ausgestaltung der Erfindung weist das Differenzialgetriebe bezüglich einer Ausgangswelle, welche mit einer Antriebsachse in mechanischer Wirkverbindung steht, in den genannten Schaltstellungen unterschiedliche Übersetzungen auf. Damit ist bei gleicher Übersetzung des Getriebes die Gesamtübersetzung des Getriebes und des Differenzialgetriebes gegenüber der genannten Ausgangswelle in den beiden Schaltstellungen des Differenzialgetriebes unterschiedlich. Der Antrieb der Hydraulikpumpe erfolgt nur in einer ersten Schaltstellung mit der, zumindest im Zugbetrieb des Kraftfahrzeugs, größeren Übersetzung des Differenzialgetriebes. Bei gleicher Drehzahl einer Eingangswelle des Differenzialgetriebes ist damit die Drehzahl der Ausgangswelle in der ersten Schaltstellung kleiner als in der zweiten Schaltstellung. Der Zugbetrieb des Kraftfahrzeugs ist dadurch charakterisiert, dass die Antriebsmaschine ein positives Antriebsmoment aufbingt.

Nach einem (Haupt-) Getriebe angeordnete Getriebegruppen (Nachschaltgetriebe) mit zwei Übersetzungen sind insbesondere bei Zahnräderwechselgetrieben für schwere Nutzfahrzeuge sehr verbreitet. Mittels der Getriebegruppe kann die Gangfolge entweder verdichtet (sogenannte Splitgruppe) oder erweitert (sogenannte Rangegruppe) werden. Der Übersetzungssprung bei einer Rangegruppe ist dazu größer als der Übersetzungsbereich des (Haupt-) Getriebes. Die genannte Ausführungsform ist besonders vorteilhaft einsetzbar, wenn das Differenzialgetriebe als eine Rangegruppe ausgeführt ist.

Damit erfolgt der Zusatzantrieb vorteilhafterweise nur bei langsamen Fahrzeuggeschwindigkeiten, bei welchen eine gegenüber einem Antrieb nur über eine Fahrzeugachse höhere Traktion auch nur erwünscht ist.

Außerdem ermöglicht die Ausführung des Differenzialgetriebe als ein Nachschaltgetriebe eine besonders kompakte Bauform der Anordnung.

In Ausgestaltung der Erfindung ist das Differenzialgetriebe in einer Planetenbauart mit einem Sonnenrad, einem Planetenträger und einem Hohlrad ausgeführt. Der Antrieb, also der Leistungseingang erfolgt über das Sonnenrad. In der ersten Schaltstellung ist der Planetenträger mit einer Antriebswelle der Hydraulikpumpe antriebsmäßig verbunden. In der zweiten Schaltstellung ist der Planetenträger und das Hohlrad verblockt, womit der gesamte Planetensatz und damit das Differenzialgetriebe im Block umläuft, so dass sich eine Übersetzung von 1 ergibt. Die Übersetzung in der ersten Schaltstellung ist unter der Voraussetzung, dass das Hohlrad nicht angetrieben wird, größer als die Übersetzung in der zweiten Schaltstellung. Diese Voraussetzung ist zumindest im Zugbetrieb des Kraftfahrzeug immer erfüllt. Im Schubbetrieb des Kraftfahrzeugs, also dann wenn von den Fahrzeugrädern ein negatives Drehmoment auf den Antriebsstrang wirkt, kann die Hydraulikpumpe auch als Hydromotor wirken und das Hohlrad antreiben. In diesem Fall wäre in der zweiten Schaltstellung die Übersetzung des Differenzialgetriebes kleiner als in der ersten Schaltstellung.

Der Aufbau des Differenzialgetriebes ist damit vergleichbar mit gebräuchlichen Rangegruppen von Getrieben für Nutzfahrzeuge. Durch die Benutzung von Baugruppen der Rangegruppen ist eine kostengünstige Realisierung des Differenzialgetriebes möglich und es ist eine einfache Zuschaltung des Zusatzantriebs über eine Klauenschaltung realisierbar. Bei Beibehaltung der Schnittestellen der Rangegruppe kann in einem Antriebsstrang statt der gebräuchlichen Rangegruppe ein Differenzialgetriebe für einen Zusatzantrieb verbaut werden, die übrigen Komponenten des Antriebsstrangs, wie beispielsweise Antriebsmaschine, Gelenkwelle und Hinterachsgetriebe können unverändert bleiben.

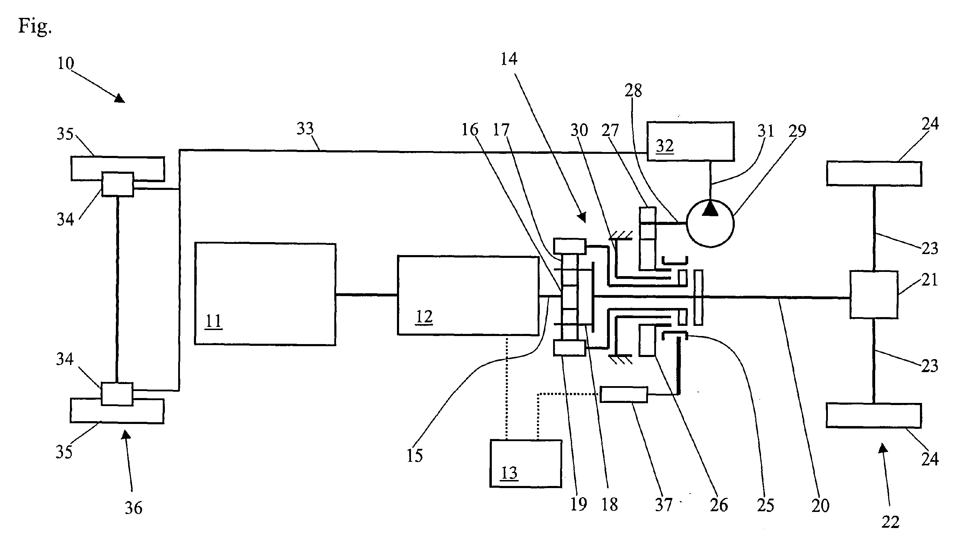

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Die einzige Figur zeigt einen Antriebsstrang mit einem hydraulischen Zusatzantrieb eines Kraftfahrzeugs in einer stark vereinfachten Darstellung

Gemäß der einzigen Figur verfügt ein Antriebsstrang 10 eines nicht dargestellten Kraftfahrzeugs über eine Antriebsmaschine 11 in Form eines Verbrennungsmotors. Nach der Antriebsmaschine 11 ist ein Getriebe 12 in Form eines automatisierten Zahnräderwechselgetriebes mit einer nicht dargestellten Anfahrkupplung angeordnet. Das Getriebe 12 wird von einer Steuerungseinrichtung 13 angesteuert, so dass Gänge im Getriebe 12 nach Maßgabe der Steuerungseinrichtung 13 gewechselt werden können.

Nach dem Getriebe 12 ist ein Differenzialgetriebe 14 in Planetenbauart angeordnet. Eine Getriebeausgangswelle 15 ist mit einem Sonnenrad 16 verbunden, welches damit einen Leistungs-Eingang des Differenzialgetriebes 14 darstellt. Um das Sonnenrad 16 ist sind mehrere Planetenräder 17 angeordnet, welche auf einem Planetenträger 18 drehbar gelagert sind. Die Planetenräder 17 sind wiederum von einem Hohlrad 19 umschlossen, so dass die Planetenräder 17 sowohl mit dem Sonnenrad 16, als auch mit dem Hohlrad 19 kämmen können. Der Planetenträger 18 vollzieht damit bei einer Drehung des Sonnenrads 16 eine Drehung um die Getriebeausgangswelle 15. Der Planetenträger 18 ist mit einer zur Getriebeausgangswelle 15 koaxial angeordneten Ausgangswelle 20 des Differenzialgetriebes 14 verbunden, welche mit einem an sich bekannten Hinterachsgetriebe 21 einer Antriebsachse 22 in mechanischer Wirkverbindung steht. Das Hinterachsgetriebe 21 treibt über Seitenwellen 23 in bekannter Art und Weise Fahrzeugräder 24 an. Die Ausgangswelle 20 stellt damit einen ersten Leistungs-Ausgang des Differenzialgetriebes 14 dar.

Mittels eines Schaltelements 25 in Form einer Schiebemuffe kann das Hohlrad 19 in einer ersten Schaltstellung, welche in der Fig. dargestellt ist, mit einem Antriebsrad 26, welches über ein Zwischenrad 27 mit einer Eingangswelle 28 eines Hydraulikpumpe 29 in Wirkverbindung steht, mittels einer Klauenverbindung verbunden werden. Dazu ist das Schaltelement 25 mittels eines Aktors 37, welcher von der Steuerungseinrichtung 13 angesteuert wird, parallel zur Ausgangswelle 20 verschiebbar. Das Antriebsrad 26 ist mittels einer Lagerung 30 so gelagert, dass es sich um die Ausgangselle 20 drehen kann. Das Antriebsrad 26 stellt damit einen zweiten Leistungs-Ausgang des Differenzialgetriebes 14 dar.

Die Hydraulikpumpe 29, welche beispielsweise als eine Schrägscheibenpumpe ausgeführt sein kann, erzeugt in einer Druckleitung 31 einen Hydraulikdruck, welcher über eine Hydrauliksteuerung 32 über eine Hydraulikleitung 33 an Hydromotoren 34 geleitet wird. Die Hydromotoren 34 sind an Fahrzeugrädern 35 einer Zusatzantriebsachse 36 angeordnet und treiben diese entsprechend dem Druck in der Hydraulikleitung 33 an. Die Hydraulikpumpe 29, die Druckleitung 31, die Hydrauliksteuerung 32, die Hydraulikleitung 33 und die Hydromotoren 34 bilden damit zusammen einen hydraulischen Zusatzantrieb.

Die Hydrauliksteuerung 32 kann beispielsweise entsprechend der Steuerung des hydraulischen Zusatzantriebs der DE 35 45 481 A1 aufgebaut sein. Dazu enthält die Hydrauliksteuerung 32 sowohl elektronische als auch hydraulische Elemente, welche wie in der DE 35 45 481 A1 beschrieben, zusammenwirken.

In dieser ersten Schaltstellung des Differenzialgetriebes 14 wird die vom Getriebe 12 gewandelte Leistung der Antriebsmaschine 11 auf die Ausgangswelle 20 und das Antriebsrad 26 und damit auf die Hydraulikpumpe 29 aufgeteilt. Für den Antrieb der Hydraulikpumpe 29 ist im Zugbetrieb des Kraftfahrzeugs ein Drehmoment notwendig, so dass das Hohlrad 19 abgebremst wird. Damit rollen die Planetenräder 17 auf dem Sonnenrad 16 ab, so dass sich eine Übersetzung des Differenzialgetriebes 14, also ein Verhältnis der Drehzahlen der Getriebeausgangswelle 15 und der Ausgangswelle 20 größer als 1 ergibt. Die Übersetzung ist dabei von den festen Zähnezahlen des Sonnenrads 16 und des Hohlrads 19 und von der veränderlichen Drehzahldifferenz zwischen den Drehzahlen des Hohlrads 19 und des Sonnenrads 16 abhängig. Die genannte Drehzahldifferenz ist wiederum von den Drehzahlen und Drehmomenten an der Ausgangswelle 20 und der Hydraulikpumpe 29 abhängig. Die Übersetzung des Differenzialgetriebes 14 stellt sich damit selbsttätig ein.

Mit der Übersetzung ändert sich auch die Aufteilung der Leistung auf die beiden genannten Leistungsausgänge, so dass sich die Aufteilung der Leistung auch selbsttätig einstellt.

Mittels des Schaltelements 25 kann die Ausgangswelle 20 und damit der Planetenträger 18 mit dem Hohlrad 19 mit einer Klauenverbindung drehfest miteinander verbunden und damit verblockt werden. Dazu wird das Schaltelement 25 vom Aktor 37 parallel zur Ausgangswelle 20 in Richtung Hinterachsgetriebe 21 verschoben, womit gleichzeitig die Verbindung zwischen dem Hohlrad 19 und dem Antriebsrad 26 der Hydraulikpumpe 29 aufgehoben wird. Die Hydraulikpumpe 29 ist damit in dieser zweiten Schaltstellung abgekoppelt und kann keinen Druck in der Druckleitung 31 aufbauen. Der Zusatzantrieb ist damit abgeschaltet und es findet keine Leistungsverzweigung im Differenzialgetriebe 14 statt.

Wenn der Planetenträger 18 mit dem Hohlrad 19 verbunden ist, rollen die Planetenräder 17 nicht mehr auf dem Sonnenrad 16 ab. In diesem Fall laufen Sonnenrad 16, Planetenträger 18 und Hohlrad 19 und damit das Differenzialgetriebe 14 als Block um und die Drehzahl der Ausgangswelle 20 entspricht der Drehzahl der Getriebeausgangswelle 15. Die Übersetzung des Differenzialgetriebes 14 ist damit 1. Das Differenzialgetriebe 14 wirkt damit wie eine herkömmliche Rangegruppe in der sogenannten schnellen Schaltstellung, also in der Schaltstellung mit der kleineren der beiden Übersetzungen der Rangegruppe.

Das Differenzialgetriebe 14 mit Schaltelement 25 und Aktor 37, sowie Antriebsrad 26 und Zwischenrad 27 können gemeinsam mit dem Getriebe 12 in einem oder getrennt in zwei Gehäusen angeordnet sein.

## Patentansprüche

1. Anordnung zum Antrieb einer Hydraulikpumpe (29) eines hydraulischen Zusatzantriebs eines Kraftfahrzeugs, wobei der Antrieb der Hydraulikpumpe (29) hinter einem, nach einer Antriebsmaschine (11) angeordneten Getriebe (12) erfolgt,
**dadurch gekennzeichnet, dass**
- nach dem Getriebe (12) ein Differenzialgetriebe (14) angeordnet ist und
- der Antrieb der Hydraulikpumpe (29) über das Differenzialgetriebe (14) erfolgt.

2. Anordnung nach Anspruch 1,
**dadurch gekennzeichnet, dass**
- das Differenzialgetriebe (14) über zwei Schaltstellungen verfügt und
- der Antrieb der Hydraulikpumpe (29) nur in einer ersten der beiden Schaltstellungen erfolgt.

3. Anordnung nach Anspruch 2,
**dadurch gekennzeichnet, dass**
- das Differenzialgetriebe (14) bezüglich einer Ausgangswelle (20), welche mit einer Antriebsachse (22) in mechanischer Wirkverbindung steht, in den genannten Schaltstellungen unterschiedliche Übersetzungen aufweist und
- der Antrieb der Hydraulikpumpe (29) nur in einer ersten Schaltstellung mit der, zumindest im Zugbetrieb des Kraftfahrzeugs, größeren Übersetzung des Differenzialgetriebes (14) erfolgt.

4. Anordnung nach Anspruch 3,
**dadurch gekennzeichnet,**
**dass** das Differenzialgetriebe (14) in einer Planetenbauart mit einem Sonnenrad (16), einem Planetenträger (18) und einem Hohlrad (19) ausgeführt ist, wobei in der ersten Schaltstellung der Planetenträger (18) mit einer Antriebswelle (27) der Hydraulikpumpe (29) antriebsmäßig verbunden ist und in einer zweiten Schaltstellung der Planetenträger (18) und das Hohlrad (19) verblockt ist.

5. Kraftfahrzeug mit einem hydraulischen Zusatzantrieb, bei welchem eine Hydraulikpumpe (29) des Zusatzantriebs mittels einer Anordnung nach einem der Ansprüche 1 bis 4 antreibbar ist.
